Europäisches Patentamt

(19) European Patent Office (11) Publication number: **0 083 163**
Office européen des brevets **B1**

(12) **EUROPEAN PATENT SPECIFICATION**

(45) Date of publication of patent specification: **05.02.86** (51) Int. Cl.[4]: **B 01 J 29/06, C 10 G 11/05, B 01 J 35/10**

(21) Application number: **82306510.7**

(22) Date of filing: **07.12.82**

(54) Heavy hydrocarbon conversion catalyst and process using same.

| | |
|---|---|
| (30) Priority: **07.12.81 US 328354** | (73) Proprietor: **ASHLAND OIL, INC.**<br>**P.O. Box 391**<br>**Ashland, KY 41101 (US)** |
| (43) Date of publication of application:<br>**06.07.83 Bulletin 83/27** | (72) Inventor: **Hettinger, William P., Jr.**<br>**P.O. Box 391**<br>**Ashland, KY 41114 (US)**<br>Inventor: **Beck, Hubert W.**<br>**P.O. Box 391** |
| (45) Publication of the grant of the patent:<br>**05.02.86 Bulletin 86/06** | **Ashland, KY 41114 (US)**<br>Inventor: **Kovach, Stephen M.**<br>**P.O. Box 391** |
| (84) Designated Contracting States:<br>**AT BE DE FR GB IT NL SE** | **Ashland, KY 41114 (US)** |
| (56) References cited:<br>**EP-A-0 032 298**<br>**EP-A-0 063 712**<br>**EP-A-0 066 725**<br>**FR-A-1 588 199**<br>**FR-A-2 303 593**<br>**FR-A-2 427 843**<br>**GB-A-1 324 205**<br>**US-A-3 140 251**<br>**US-A-3 375 065**<br>**US-A-4 198 320**<br>**US-A-4 219 406** | (74) Representative: **Lambert, Hugh Richmond et al**<br>**D. YOUNG & CO. 10 Staple Inn**<br>**London, WC1V 7RD (GB)** |

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

Field of the Invention
This invention relates to zeolite-containing catalysts for converting high boiling, heavy hydrocarbons, such as reduced crudes, residual oils, topped crudes and vacuum gas oils, to low boiling transportation fuels, and to the catalytic cracking of such hydrocarbons using catalysts.

Background and Prior Art
The fluid catalytic cracking (FCC) of gas oils boiling below about 1025°F (5450°C) with crystalline zeolite-containing cracking catalysts is well known. Generally, the catalyst used in FCC processes has a relatively low crystalline zeolite content, e.g., less than 20 wt %, usually 10—15 wt %, and has a relatively low hydrothermal stability due to a low silica to alumina ratio. Generally the crystalline zeolite content of such FCC catalysts comprises a crystalline zeolite which has been ion exchanged to provide a high cerium to lanthanum ratio and which is dispersed in a matrix material having a low pore volume usually not above about a0.22 ml/gm and an average pore size of less than about 500 angstroms (0.05 μm), usually the matrix serves merely as a binder and has little or no cracking activity.
The gas oil feeds used in such FCC processes are generally from sources that are relatively low in metal contaminants and Conradson carbon value, i.e. below about 1%, and therefore the problems associated with such contaminants, e.g. pore blockage and general inactivation of the catalyst by excessive coke and metal deposition, are minimal.
On the other hand such problems are severe when it comes to the catalytic cracking of high sulfur or sour crudes and those comprising high levels of metal contaminants and such feeds cannot be used in FCC processes without extensive pretreatment of the feed to remove or substantially reduce these undesired components. Such pretreatment processes include hydrogenation, propane deasphalting, coking, hydrocracking, visbreaking and vacuum distillation. These processes, however, are expensive and considerably reduce the volume of the crude oil that can be upgraded into transportation fuel.
Attempts to convert such poor quality feeds with a conventional low zeolite-containing FCC conversion catalyst but without pretreatment lead to rapid catalyst deactivation due to the deposit of metals and carbon in the catalyst which can be corrected only by using very high catalyst replacement rates. Not only that, but subsequent attempts at high temperature regeneration of the used catalyst in the presence of steam are found to rapidly destroy the activity of the zeolite cracking component of the catalyst. Moreover, this condition is aggravated by the use of catalysts with a low silica-alumina ratio, by the use of high sodium-containing zeolites and by specific metal contaminants such as vanadium, sodium, nickel and iron. Not only that, but the activity of the catalyst is affected by the large amount of heavy high boiling hydrocarbons in reduced crudes that are not vaporized and which rapidly coat the catalyst particles and cause particle coalescence and agglomeration. Furthermore, the sorbed heavy hydrocarbons contribute to pore blockage, both in the matrix and the zeolite and cause diffusion problems. Not only that but acid sites in the catalyst are also neutralized by adsorption of basic nitrogen compoounds in the high boiling reduced crude feed.
A substantial need exists, therefore, for an effective hydrocarbon cracking catalyst which can be used directly with high boiling, heavy hydrocarbon feeds which are high in metal contamination and which contain high Conradson carbon-producing components.
Previous attempts to improve the resistance of hydrocarbon cracking catalysts to metal poisoning have included the addition of a colloidal dispersion of silca and/or alumina particles to a preformed catalyst or catalyst gel (U.S. Patent No. 4,198,320) and the use of a catalyst material comprising from 1—40% by weight of a zeolite dispersed in a matrix of refractory metal oxide having a pore size in the range 50—100 Angstroms (0,005—0,01 μm).

Summary of the Invention
In one aspect of the present invention, there is provided a catalyst for the catalytic conversion of high boiling, heavy hydrocarbon feeds high in metal contamination and of components producing high Conradson carbon values into transportation grade fuels, the catalyst comprising, in particulate form, at least 35% by weight (based on total catalyst weight) of a rare earth exchanged crystalline zeolite having a silica:alumina ratio of at least 4.5, a lanthanum:cerium ratio of at least 1:1, and containing no more than 0.25 percent by weight (based on the total catalyst weight) of residual sodium, dispersed in a porous matrix comprising a mixture of clay and a refractory metal oxide, said catalyst having a pore volume of at least 0.22 cc/gm and an average pore size of at least 500 Angstroms (0.05 μm).
In a second aspect of the present invention, there is provided a process for the catalyst conversion of high boiling, heavy hydrocarbon feeds high in metal contamination and of components producing high Conradson carbon values into transportation grade fuels which comprises contacting the feed at an elevated temperature with a catalyst as defined above.

Detailed Description and Examples
The catalysts of this invention are partiuclarly suited to the conversion into transportation grade fuels of the heavy hydrocarbon residues boiling above about 1025°F (550°C) that are recovered as the bottoms

2

product from atmospheric distillation of hydrocarbon crudes and which contain relatively large amounts of asphaltenes, polynuclear aromatics, polar aromatic compounds, naphthenes, porphyrins, nitrogen and sulfur compounds. More particularly, the catalysts of this invention are especially suitable for the conversion of high boiling hydrocarbon feeds that are known by such terms as reduced crudes, topped crudes, residual oils, shale oils, oil products from coal liquefaction, tar sands oil products and resids, all of which comprise some carbo-metallic oil components in the form of free metals, asphaltenes, refractory aromatic and polar compounds, naphthenes and porphyrins. The catalysts of this invention are most especially useful for processing high boiling, heavy hydrocarbon feed material having Conradson carbon-producing components which give rise to Conradson carbon values in the range of 2 to 10 and comprising up to 75 ppm or more of vanadium especially combinations of Ni + V in excess of 6000 ppm and in which either the nickel or the vanadium may constitute the major component.

The catalysts of this invention have a high cracking activity and long service life which enable the use of low catalyst volumes which contribute significantly to the economic efficiency of a reduced crude cracking operation. The ability to use low catalyst volumes is desirable since it reduces the size of the equipment used to regenerate the catalyst, and reduces the residence time of the catalyst in the regenerator. Not only does this increase the time available for active use of the catalyst in the cracking process, but it reduces the time that the contaminated catalyst is exposed to high temperature steam and $O_2$ that is used in the regeneration process. In the case of vanadium contaminated catalysts, this high temperature exposure to steam and $O_2$ during the regeneration process has been found to be highly detrimental to catalyst life.

In the process of this invention catalyst to oil feed ratios will usually be in the range of 5:1 to 20:1 with a relatively short contact time such as attained in a riser cracking zone or process.

The catalysts of this invention will usually have a particle size in the range of 20 to 200 μm so as to be readily fluidizable. As indicated, they contain a higher than normal percentage of high activity crystalline aluminosilicate ($SiO_2$:$Al_2O_3$ ratio greater than 4.5), ion exchanged to provide a lanthanum rich crystalline zeolite of low residual sodium, i.e. less than 0.25 wt % in the finished catalyst and preferably less than 0.1 wt % sodium oxide.

In the catalyst of this invention the zeolite is dispersed in a matrix composition and comprises a clay and a refractory metal oxide which provides a desired hardness in the final microspherical particle. The refractory metal oxide or oxides suitable for this purposwe include silica, alumina, silica-alumina, silica-magnesia, silica-alumina-magnesia, silica-titania, silica-zirconia, titania, zirconia and mixtures and combinations thereof. The matrix is essentially a binder for the zeolite but may provide some cracking activity and to this end one or more acidic modifiers may be dispersed in the matrix. The catalyst is prepared under conditions to provide a pore volume of at least 0.22 ml/g and preferably at least 0.32 ml/g. Particularly preferred are catalyst particles with a pore volume in the range of 0.4 ml/g to 0.8 ml/g.

The zeolites or crystalline aluminosilicates (CAS), used in the catalysts of this invention are three dimensional structures having a particle size in the range 0.05 to 5 μm and containing a large number of uniform openings and cavities interconnected by smaller, relatively uniform holes or channels.

Some zeolites which may be used with varying degrees of success include mordenite, gmelinite, zeolite "L", ZSM 4, faujasite and dealuminized faujasite of at least 5.5f/1 silica to alumina ratio. A "Y" type crystalline faujasite is particularly preferred. Some characteristics of these crystalline zeolites are as follows:

|  | Pore Dimensions | Pore Free Area ($A^2$) | Si/Al Radio |
| --- | --- | --- | --- |
| Faujasite | 7.4 × 7.4 | 55.0 | 2.8 |
| ZSM4 | 7.3 × 7.3 | 53.5 | 3.1 |
| "D" | 7.1 × 7.1 | 50.5 | 3.6 |
| Gmelinite | 7.0 × 7.0 | 49.0 | 2.5 |
| Mordenite | 6.7 × 7.0 | 46.8 | 6.0 |

The preferred zeolites for preparing the metals tolerant catalyst of this invention are a catalytically active crystalline zeolite, particularly faujasite, having an $SiO_2$:$Al_2O_3$ ratio greater than 4.5:1 and which has been ion exchanged to include rare earths and particularly provide a lanthanum to cerium ratio of at least 1:1 and preferably at least 2:1, and most preferably at least 3:1. It is known that zeolite stability is directly proportional to the lanthanum or neodymium content and inversely proportional to the cerium content. Thus in commercial applications, some lanthanum rich exchange solutions have been used for zeolite exchange. The faujasite type zeolites known as "X" and "Y" crstyalline zeolites are regularly shaped, discrete particles generally of a particle size in the range of 0.05 to 10 μm, preferably less than 5 μm when

3

synthetically prepared and used in this invention. The especially preferred zeolite is the "Y" type crystalline zeolite, and the higher the silica to alumina ratio, the better its stability. Generally speaking, the preferred "Y" zeolite will have a silica-alumina ratio of at least 4.5 more usually at least 5:1 and most preferably at least 5.5:1.

Prior to use in this invention the zeolites are catalytically activated and stablized by an ion exchange to replace sodium with hydrogen and/or a rare earth metal to provide a final catalyst composition which contains less than 0.25 wt % sodium oxide. Preferably the sodium ions are replaced by the rare earth metal ions rather than hydrogen since these rare earth exchanged zeolites, especially the rare earth exchanged Y faujasites are much more stable than the hydrogen form; and this is particularly so with high lanthanum content zeolites. In particular, when dealing with vanadium as a contaminating metal in the feed a high lanthanum content of at least 7 wt % is especially desirable, and, generally speaking, the rare earth content of the catalyst, calculated as rare earth oxide, will be at least 6% by weight, preferably at least 7%.

The most common crystalline zeolite used in the preparation of the catalysts of this invention is a naturally occurring or a synthetic sodium "Y" faujasite, which upon a series of ion exchange treatments with a rare earth chloride (Ce/La ~ 5/1) solution yields a low sodium rare earth exchanged zeolite, herein called REY (Na = 1—2%).

The ion exchanged modified rare earth containing crystalline zeolites described above are highly active catalytic compositions and require dilution in a matrix material as herein defined in order to keep the activity within acceptable catalytic cracking limits. For this purpose, the rare earthed exchange zeolite as described above is dispersed in an amount of at least 35 wt %, usually 35—60% and preferably about 40 wt % in a matrix mixture of clay and refractory metal oxide. Preferably the clay component is a kaolinite clay having a particle size of about 1 micron.

As to the matrix, as already indicated, this comprises a mixture of a refractory metal oxide, preferably silica, alumina or silica-alumina, and a clay, preferably kaolin, although other clay minerals such as kaolinite, halloysite, montmorillonite, metakaolin and acid modified clays, may also be used.

Preferably the pore distribution in the matrix is such that at least 40 percent of the pores have a diameter of at least 500 Angstroms (0.05 µm); and at least 25 per cent have a pore size greater than 1000 Angstropms (0.1 µm) so that the highest molecular weight components of the feed will be adsorbed without causing undesired pore blockage. Also diffusion problems associated with the escaped of cracked material are minimized and pure blockage by metal or carbon deposition is substantially avoided.

The pore size distribution and volume can be controlled by employing different amounts of two or more different pore sized particles in forming the matrix and this variation in pore size distribution and volume can be used as a basis for varying particle porosite and attrition resistance properties of the final catalyst particles.

A large pore volume and large pore size is also necessary so that the highest boiling components of a reduced crude feed, which are not completely vaporized upon contact with the catalyst at the process temperature of up to 1450°F (788°C), can undergo both thermal and catalytical cracking in preference to merely coating the catalyst particle surface and causing undesired particle agglomeration. It is also important to encourage the condensation products produced by reduced crude cracking to deposit on the catalyst itself rather than on the inner surfaces of the cracking apparatus and this is particularly influenced both by employing the catalyst to oil ratio already mentioned and by providing a matrix having the large pore size and pore volume already defined. Preferably the catalyst to oil ratio is such that the liquid hydrocarbon material will fill no more than from 1/4 to 2/3 of the pore volume.

The matrix material of the catalysts of this invention can be either completely inert or have some cracking activity. Preferably the matrix will be an acidic acting material which will ensure that both thermal and catalytic cracking of absorbed and adsorbed high boiling hydrocarbon components is accomplished. The thermal conversion of high molecular weight components in the feed to lower molecular weight components is an important aspect in the use of this invention. Thus the combination of a high pore volume, a large pore size and a catalytically active matrix material is desirable so that high molecular weight high boiling metallo-porphyrins and asphaltenes or Conradson carbon precursors in the feed, as well as metal contaminants are deposited on the surface of the matrix rather than on the crystalline zeolite component of the catalyst.. In addition, acidity of the matrix is particularly desirable so that basic heavy nitrogen compounds in the feed can be prevented from entering the zeolite structure, wherein they would otherwise tend to neutralize the special cracking sites in the zeolite thus tending to reduce its life. Additional acidity can be provided in the matrix by the addition of one or more materials such as sulfonates, phosphates, a halogen contributing material, phosphoric acid, boric acid, acid activated clay, silica-alumina, silica-titania, silica zirconia and other such acid contributing materials.

One of the important attributes of the catlysts of this invention is in the control of the metals deposited from crude oils and other feeds which contain substantial quantities of carbo-metallic components. As discussed herein, these carbo-metallic components comprise both Conradson carbon contributors and metals such as Ni, V, Fe and Na. Of these vanadium and, to a lesser degree, iron, has now been identified as by far the most destructive of the metal contaminants, followed by sodium. Nickel appears to be the least destructive. Vanadia, as vanadium pentoxide, causes irreversible destruction of the crystalline zeolite structure, rapidly producing a much lower activity material of or approaching amorphous nature. Sodium does lead to permanent neutralization of the zeolite acid cracking sites. Nickel leads primarily to temporary

# 0 083 163

neutralization of the cracking sites by promoting dehydrogenation and deposition of carbonaceous materials.

In arriving at these conclusions varying concentrations of Ni, V and Na were impregnated into several catalyst mixtures or compositions to study the effect of these metals on steamed equilibrium catalysts. The results obtained are reported below in Table A on the basis of 0.5 wt % metal reducing the relative activity of each catalyst mixture. That is, 0.5 wt % nickel reduces the conversion level 5—15%, 0.5 wt % vanadium reduces the conversion level 67—100% and 0.5 wt % sodium reduces the conversion level approximately 50—60%. This reduction is a percentage of the conversion or a relative value.

TABLE A
% Reduction in Relative Activity

|  | Catalyst 1 (Super DX) 10% Zeolite | Catalyst 2 (GRZ-1) 40% Zeolite | Catalyst 3 (X-1966) 25% Zeolite | Factor |
|---|---|---|---|---|
| 0.5% Ni | 15 | 7 | 5 | 9 |
| 0.5% V | 100 | 60 | 62 | 87 |
| 0.5% Na | 50 | 50 | 60 | 53 |

The catalysts of this invention are particularly effective in the entrapment of metals and accumulate them to a much higher order of magnitude than heretofore possible. For example, using the catalysts of this invention it is found that one can operate at varying metal levels in the feed, which can go as high as 675 V equivalents based on the feed or as high as 180,000 V equivalents based on the catalyst. This metal entrapment is made even more effective by the incorporation of one or more vanadia immobilization materials which will form high melting point complexes with the vanadium and which melt at temperatures above the temperatures normally encountered in the catalyst regeneration operation. Suitable materials which act as metal accumulators and vanadia immobilization agents incldue alumina, pillared interlayered clay material and other selected metal additives, e.g. Ti, Zr and In compounds which complex with vanadia to form high melting complexes.

The catalysts of this invention may also include other components such as fillers, binders and porosity control agents, e.g., carbon black, as required.

In preparing the catalysts of this invention a slurry or gel of the matrix materials is normally prepared first and to this slurry or gel is added a crystalline zeolite such as REY or CREY of Ce/La ratio $\geqq$ 1/1 (prepared outside of the slurry), followed by spray drying of the mix. A second approach is the preparation of the crystalline zeolite in situ — that is, utilizing the matrix materials and selected reaction conditions to generate the zeolite in situ, within the matrix material before spray drying. In these preparations, the most common salts utilized are in the sodium form because of their availability and low cost, e.g., Na silicate, Na aluminate, Na hydroxide. Thus relatively large amounts of sodium are always in the presence of the zeolite and also in the matrix materials. The sodium content of the REY in the spray dried catalyst particles is then lowered by water wash and further treated with a rare earth salt solution to lower the sodium content of the particles still further, e.g. down to about 0.7—1.2 wt % Na in the CREY componeent of the catalyst. (CREY refers to the pre-ion exchanged material REY with a sodium content of 1—2% after it has been spray dried, washed, and further ion-exchanged to a final sodium content of 0.7 to 1—2%). This type of catalyst preparation reduces costs on the conversion of REY to the spray dried material CREY.

As to the matrix materials, silica, alumina and silica-alumina are the preferred refractory oxides and these are provided in the matrix using sodium salts such as Na aluminate and Na silicate. These, of course, do contribute a high Na content but this can easily be reduced by using an acid ($H^+$) or alkaline ($NH_4^+$) wash. Several repeated washings may be necessary to reduce the sodium content to an acceptable level. Deionized water is unsuitable for washing purposes since it also has a high Na content and demineralized water is required. They clay utilized as a part of the matrix material also introduces some Na plus other alkaline metals such as K, Ca, Mg and the like. However, clay materials suitable for catalyst preparation normally contain these materials tightly bound to the extent that they do not re-exchange into the crystalline zeolite present. However, even this tightly bound sodium can be partially removed by an acid treatment or by exchanging with $NH_4^+$ or rare earth salts.

In one particular aspect of this invention, the microspherical catalyst particles prepared by the above described technique are observed to include hollow shell particles some of which at least include one or more large major passageways into the interior of the particle shell. Thus the improved catalyst of this invention comprises metal-tolerant spherical catalyst particles which permit high levels of diffusion and thus remain effective catalytically, even with high levels of metal contaminant, for a much longer time than heretofore possible.

5

The pore size of the catalysts prepared by the techniques of this invention may be modified to some extent by incorporating, for example, carbon black or other suitable pore size contributing material in the slurry composition before spray drying. The metals adsorbing capacity of the catalyst can also be increased by incorporating yet another material in the matrix and comprising one or more materials selected from zeolite A, mordenite, chabazite, cheap naturally occurring faujasite, a pillared clay material or combinations thereof. The extent of these metal-absorbing and adsorbing materials is, however, limited by the necessity to avoid undesired addition of sodium to the catalyst particles and also by the necessity to provide a relatively inexpensive catalyst without upsetting desired activity-selectivity characteristics thereof.

Utilizing the concept of the present invention it is believed that the refiner is now able to vary composition of the catalyst particles as may be desired to obtain high activity catalyst particles which reduce the cost of manufacture of the catalyst, reduce capital investment and which permit easy adjustment of catalyst composition and activity to obtain best conversion rates for any given oil charge. Other advantages of this invention will be recognized by those skilled in the art. The main benefits derived by using the catalyst and the catalyst preparation techniques of this invention are:

1) The ability to process reduced crudes which contain high vanadium (V) levels and which would normally result in the formation of $V_2O_5$. $V_2O_5$ has a melting point of 1275°F (691°C) which is generally below the temperature used in the regeneration of the catalyst. Molten $V_2O_5$ therefore tends to flow through the catalyst during regeneration and thus destroys the catalytic activity. Moreover any sodium present reacts with $V_2O_5$ to yield sodium vanadate with an even lower melting solid of 1240°F (671°C). This low melting point of sodium vanadate is considered most undesirable since it is below normal regeneration temperatures (1250 to 1500°F: 676 to 815°C) and tends to flow as a liquid through catalyst particles causing irreversible destruction of the zeolite and loss of catalyst activity and selectivity. In addition, this potential flow of vanadia or sodium vanadate causes matrix sintering, pore blockage and particle coalescence sufficient to cause defluidization of the catalyst particles.

To counteract the liquid migration effects of $V_2O_5$, immobilization agents such as Ti, Zr and In may be added to the catalyst during or after preparation, such agents reacting with the $V_2O_5$ to form stable high-melting solids such as vanadium titanate, vanadium zirconate or vanadium indiate, all of which melt above 1800°F (982°C). Even so the presence of sodium will form high melting sodium derivatives of Ti, Zr, In, such as Na titanate, Na zirconate and Na indiate and thus reduce the effectiveness of Ti, Zr and In as V immobilization agents. The low sodium content of the catalyst of this invention is therefore highly beneficial in maintaining catalyst activity in the presence of vanadium as a contaminant in the feed.

2) The low sodium content also minimizes migration and reaction of the sodium with acid cracking sites present in the zeolite and matrix material, which would otherwise reduce the activity-selectivity characteristics of the catalyst. This necessarily reduces the desired cracking activity of the catalyst matrix for the conversion of relatively large non-volatile hydrocarbon molecules that can enter the zeolite pore structure for further cracking to gaseous and liquid fuels such as gasoline and heating fuels. By having little or substantially no mobile sodium present in the catalysts of this invention and by operating an efficient desalter on the raw crude oil feed one can ensure that the effectiveness of vanadia immobilization additives are maximized and sodium deactivation is minimized.

3) By having little or no mobile sodium present in the matrix materials, obtained by acid treating and exchanging sodium out of any clay material utilized, a larger number of acid sites can be provided and maintained in the catalyst matrix. one can also tolerate a somewhat higher sodium level in the feed, since the matrix can react with or immobilize sodium present in the feed, so that cracking activity is maintained for a longer period of time.

4) The calcination of a (REY) rare earth exchanged "Y" zeolite followed by additional (RE) rare earth exchange after calcination ensures high sodium removal and provides the low sodium content special crystalline zeolite composition particularly desired. Furthermore, a better temperature control of zeolite calcination is possible and a better rare earth exchange environment is provided. Secondly, the rare earths are more easily exchanged into the crystalline zeolite to replace sodium and/or hydrogen as opposed to ion-exchanging the final catalyst complex.

Illustrative materials which may be used in the catalysts of this invention are as follows, all of which are commercially available:

(1) *Hydrite UF:* a kaolinite clay providing a medium micron particle size of about 0.20; a pH in the range of 4.2—5.2; a 325 mesh residue maximum percent of 0.20; and an oil adsorption value of 47. The wt % composition of the clay is as follows:

| Aluminum oxide | 38.38 | Calcium Oxide | 0.05 |
|---|---|---|---|
| Silicon oxide | 45.30 | Magnesium oxide | 0.25 |
| Iron oxide | 0.30 | Sodium Oxide | 0.27 |
| Titanium oxide | 1.44 | Potassium oxide | 0.04 |

6

(2) *N-219 L carbon black (Ashland Chemicals):* a very fine particle sized, high surface area furnace black imparting high tensile strength to rubber compounds. The properties are as follows:

| | |
|---|---|
| Particle Diameter, µm | 28 |
| ASTM Iodine No. | 115 |
| DBP Absorption, cc/gm | 0.78 |
| Reflectance Ratio Percent of IRB # 3 | 90 |
| Percent Heat Loss | 0.7 |
| Percent Transmittance (Burgive) | 97 |
| Density, gm/l | 449 |

(3) *PQ Corp. "N" Brand sodium silicate, analysis:*

| | | |
|---|---|---|
| Wt Ratio ($SiO_2/Na_2O$) | 3.22 | |
| % $Na_2O$ | 8.90 | |
| % $SiO_2$ | 28.7 | |
| Density °Be @ 68°F (20°C) | 41.0 | |
| Density kg/litre | 1.4 | |
| Viscosity Centipoise @ 68°F (20°C) | 180 cps | (0.18 nanoseconds/m$^2$) |

(4) *Catapal SB alumina:* an ultra high purity alpha alumina monohydrate (Boehmite) prepared as a white spray dried powder. It is converted to gamma alumina by calcination of 900°F (482°C) for about 3 hours. A typical chemical analysis (wt %) is as follows:

| | | | |
|---|---|---|---|
| $Al_2O_3$ | 74.2 | $Na_2O$ | .004 |
| $SiO_2$ | .008 | Sulfur | <.01 |
| $Fe_2O_3$ | .005 | | |

Particle size distribution is identified as:

48% < 45 µm
12% > 90 µm

In the cracking of heavy hydrocarbons using the catalysts of this invention a variety of different types of apparatus may be used, but preferably apparatus designed to provide relatively short contact times between the hydrocarbon feed, the vaporous conversion products and the catalyst particles, i.e. less than 3 seconds and preferably in the range 0.5 to 2 seconds, and at elevated temperatures which effect the desired cracking of the heavy hydrocarbon feed and its conversion to more useful products. The product vapors will generally be recovered at a temperature within the range of 950 to 1150°F (510 to 621°C) but more usually not above about 1100°F (593°C). In cooperation with the catalytic cracker a catalyst regeneration system will generally be used, preferably a system designed to minimise the catalyst regeneration time and to operate at temperatures below about 1500°F (815°C) and more usually below about 1400°F (760°C) so as to produce a recoverable CO rich flue gas. The catalyst regeneration operation is designed to provide a regenerated catalyst of low residual carbon content, preferably less than 0.1 wt %. In a preferred regeneration technique, regeneration is effected in two or more stages in combination with one or more catalyst stripping operations. This is in order to reduce the exothermic temperature rise which occurs during the removal of the relatively large deposits of hydrocarbonaceous materials and metal contaminants present in the used catalyst. More particularly a two stage regeneration technique is contemplated using oxygen or $CO_2$ to remove hydrocarbonaceous components in one stage, and a relatively high temperature second stage to remove hydrogen, sulfur and nitrogen. In another technique high temperature $CO_2$ is used to remove some hydrogen and some of the carbonaceous deposits in the used catalyst in one or more stages with one or more intervening stages in which further portions of the deposited carbonaceous material are removed by oxygen combustion to produce a CO or $CO_2$ rich flue gas, which can be recovered from the operation. In any of these regeneration techniques it is particularly desirable to restrict the temperatures of oxygen combustion to relatively low levels, preferably below about 1450°F (788°C), which will provide a recoverable CO rich or $CO_2$ rich flue gas. Removing hydrogen in hydrocarbonaceous deposits with $CO_2$ as well as carbon to produce recoverable CO substantially improves the overall heat balance of the combined cracking/regeneration operation.

The catalysts of this invention may be prepared by more than one procedure. Some typical procedures are provided in the following examples:

### Example 1

STEP A

A silica sol was prepared by adding 9.2 L of sodium silicate (PQ Corp. "N" Brand) to 12 L of a 8 wt % $H_2SO_4$ solution. The addition was made continuously over a 30 minute period. The pH of the sol at this point was 2.0. A total of 10 kg of a kaolinite clay designated Hydrite UF was slurried in 8 L of 2.5 pH water with 30 gms. of sodium pyrophosphate and then added to the silica sol. The pH of the slurry after the kaolinite clay addition is 2.4.

STEP B

A Y zeolite (faujasite) having a silica to alumina molar ratio greater than 5:1 was calcined at 1050°F (566°C) and ion-exchanged with a rare earth mixture, having a lanthanum to cerium molar ratio of less than 3:1 and in which the cerium oxide comprised less than 15 wt % of the total rare earth oxides, both before and after calcination.

STEP C

The rare earth exchange zeolite obtained in Step B is slurried in water at a pH of 3.0 and the zeolite slurry was added to the clay-silica sol slurry from Step A to yield a slurry with a pH of 3.0. This was then spray dried at an inlet temperature of 800°F (427°C) and outlet temperature of 300°F (149°C). The product was washed a total of three times with a large excess of tap water at 150°F (60°C) for 30 minutes.

Next the catalyst was again rare earth exchanged 3 times with a solution containing 3—10% rare earths at a temperature of 150°F (66°C) for 30 minutes each. The solutions are separated from the catalyst and the particles are washed and dried at 350°F (177°C).

Three different catalyst compositions prepared following the procedure above identified and identified as RCCC-1 Special 1, 2 and 3 were analyzed and found to comprise the compositions identified in Table B below.

TABLE B

ELEMENTAL COMPOSITION WT% I.B. (Ignited Basis)

|  | RCCC-1 Sp.1 | RCCC-1 Sp.2 | RCC-1 Sp.3 |
|---|---|---|---|
| ZEOLITE | 40* | 41* |  |
| CREY | 35 | 39 | 38 |
| $SiO_2$ | 68.6 | 65.8 | 70.3 |
| $Al_2O_3$ | 25.8 | 24.8 | 27.6 |
| $TiO_2$ | 1.18 | 1.04 | 1.16 |
| $Fe_2O_3$ | 0.49 | 0.18 | 0.21 |
| $Na_2O$ | 0.26 | 0.15 | 0.28 |
| $La_2O_3$ | 3.10 | 3.29 | 3.80 |
| $CeO_2$ | 2.30 | 2.06 | 1.60 |
| $Nd_2O_3$ | 1.11 | 1.18 | 1.36 |
| $Pr_6O_{11}$ | 0.39 | 0.41 | 0.50 |
| ($RE_2O_3$ total) | 6.90 | 6.94 | 7.26 |
| La/Ce | 1.35 | 1.60 | 2.38 |
| Total Pore Volume % ml/g | 0.37 | 0.37 | 0.28· |
| P.V. (500—2000 A; 0.05—0.2 μm) | 0.16 ml/g | 0.19 ml/g | 0.09 ml/g |
| % of Total P.V. in size range (0.05 to 0.2 μm) | 43% | 51% | 33% |

* By X-ray

## Example 2
Catalyst Preparation Procedure for Gel Catalyst 40% CREY, 10% Kaolinite Clay, 50% $SiO_2/Al_2O_3$ Gel

2.37 kg of $Na_2SiO_3$ ("N" Brand from PA Corp) and 12.7 L of tap $H_2O$ were added to a Kady mill and mixed for 1 minute followed by the addition of 600 g of 35% $H_2SO_4$. The resultant solution was mixed for a further 2 minutes before allowing to stand for 1 hour at 100°F (38°C) without stirring to obtain a pH of 11. An additional 60 g of 35% $H_2SO_4$ were then added to gel the silica after standing for 30 minutes at 100°F (38°C), pH = 9.9.

2. kg of alum (Al(NH$_4$)(SO$_4$)$_2$. 12 $H_2O$) in 8 L of tap $H_2O$ with 30 ml of conc. $H_2SO_4$ were added to the gel slurry obtained as above and mixed for 2 mintues and allowed to stand for 15 minutes at 100°F (38°C) by which time the pH was 3.3. This $SiO_2$—$Al_2O_3$ gel slurry was further mixed for 3 mintues after adding 850 ml of concentrated $NH_4OH$ to raise the pH to 6.4.

900 g of CREY and 230 g of Hydrite UF clay were then added to the gel slurry and mixed for 22 minutes at 120°F (49°C). The resultant pH was 5.6 and the viscosity @ 120°F (49°C) was 880 cps. (0.88 nanoseconds/ m$^2$). The slurry was then spray dried at a 400°C inlet and a 120°C outlet temperature.

Each kilogram of spray dried microspheres was washed 3 times with 4 L of deionized $H_2O$ at 150°F (66°C) before exchanging 3 times with 4 L of 2N rare earth chloride solution at 150°F (66°C). The filter cake was then washed 3 times with 4L of deionized $H_2O$ before drying at 300°F (149°C) for 10 hours.

The final catalyst thus obtained was characterized as follows in Table C.

# 0 083 163

## TABLE C

| | Fresh | After Steaming at 1450°F (790°C) for 5 hours |
|---|---|---|
| Surface Area, M²/g | 453 | 292 |
| Zeolite Intensity | 16.4 | 8.2 |
| Relative Activity | | 699 |
| Na, wt % | 0.24 | |
| SiO₂, wt % | 74.6 | |
| Hg Pore Volume, ml/g | 0.34 | |

A specific catalyst in accordance with this invention is characterized as follows:

| | | | |
|---|---|---|---|
| 1. | Zeolite Content | 40 wt% | |
| | Zeolite SiO₂/AL₂O₃(molar) | ≧ 5 | |
| | Zeolite La/Ce (molar) | ≧ 3 | |
| 2. | Total rare earths (RE₂O₃) | ≧ 7 wt% | |
| 3. | Total Na₂O | < 0.3 wt% (pref. <.25 wt%) | |
| 4. | Pore Volume (H₂O) | > 0.40 cc/gm | |
| 5. | ABD | 0.7 g/cc | |
| 6. | Surface Area | | |
| | (a) Total | > 250 M³/g | |
| | (b) Matrix | < 20 m²/g | |
| 7. | Particle Size Distribution | | |
| | (a) 0—40 µm range | < 10 wt% | |
| | (b) APS | 65 µm | |
| 8. | Hydrothermal Stability, MAT | | |
| | (788°C, 5 hours, 100% H₂O) 87 | | |
| 9. | Attrition Resistance | | |
| | (a) DI (Davison Index) | < 10 | |
| | (b) JI (Jersey Index) | < 1.5 | |

The catalyst above characterized, is particularly suitable for use in converting and upgrading reduced crude hydrocarbon materials boiling above about 1025°F (552°C) and comprising carbo-metallic components, e.g. residual oils, topped crudes, shale oil, oil products of coal liquefaction and oil products of tar sands, into more useful products.

Within the preceding description the following are known to be registered trademarks and are hereby acknowledged as such viz: Hydrite UF and Catapal SB.

## Claims

1. A particulate catalyst for the catalytic conversion of high boiling, heavy hydrocarbons high in metal contaminants and Conradson carbon-producing values, said catalyst comprising a rare earth exchanged crystalline zeolite dispersed in a porous matrix, characterised in that the catalyst particles comprise at least 35% by weight (based on total catalyst weight) of a rare earth exchanged crystalline zeolite having an SiO₂:Al₂O₃ ratio of at least 4.5, a lanthanum:cerium ratio of at least 1:1 and containing no more than 0.25

# 0 083 163

weight per cent (based on total catalyst weight) of residual sodium, dispersed in a porous matrix comprising a mixture of clay and a refractory metal oxide, said catalyst having a pore volume of at least 0.22 cc/g and an average pore size of at least 500 Angstroms (0.05 µm).

2. A catalyst according to claim 1, characterised in that the crystalline zeolite has a $SiO_2:Al_2O_3$ ratio of at least 5.5, a lanthanum cerium ratio of at least 3:1 and a residual sodium content of less than 0.1%.

3. A catalyst according to claim 1 or 2, characterised in that the matrix has a pore volume in the range 0.4 to 0.8 cc/g and pore size distribution in which at least 40% of the pores have a diameter of at least 500 Angstroms (0.05 µm) and at least 25% have a diameter greater than 1000 Angstroms (0,1 µm).

4. A catalyst according to any one of claims 1—3 wherein the refractory metal oxide is silica, alumina, silica-alumina, silica-magnesia, silica-alumina-magnesia, silica-titania, silica-zirconia, titania, zirconia or a mixture of two or more thereof.

5. A catalyst according to any one of claims 1—4, wherein the clay component is kaolin, kaolinite, halloysite, montmorillonite, metakaolin or an acid modified clay.

6. A catalyst according to any one of claims 1—5 wherein the zeolite is a rare earth exchanged cordenite, gmelinite, zeolite "L", ZSM4, faujasite or dealuminated faujasite.

7. A catalyst according to any one of claims 1—5, wherein the zeolite is a rare earth exchanged crystalline "Y" faujasite having a silica to alumina ratio of at least 5:1.

8. A catalyst according to any one of claims 1—7, which additionally contains a vanadium immobilizing agent comprising a compound of titanium, zirconium or indium which is capable of forming a complex at elevated temperature with vanadium pentoxide.

9. A method of forming a catalyst as claimed in any one of claims 1—8, which comprises forming a slurry or gel comprising the refractory metal oxide and said clay, adding to said slurry or gel a rare earth exchanged zeolite, spray drying the slurry so formed, washing the spray dried particles and subjecting the washed and dried particles to a further rare earth ion exchange treatment.

10. A method according to claim 9 which comprises gelling an aqueous sodium silicate and/or sodium aluminate solution, incorporating into the gel a kaolinite clay and a rare earth exchanged crystalline zeolite having a $SiO_2:Al_2O_3$ ratio of at least 4.5 and a lanthanum:cerium ratio of at least 3:1, spray drying the slurry so formed, washing the spray dried particles and subjecting the washed particles to a further rare earth ion exchange treatment thereby to reduce the residual sodium content of the zeolite in said particles to less than 0.1%.

11. A method according to claim 10 or 11, wherein the rare earth exchanged crystalline zeolite is a Y-type crystalline faujasite having a $SiO_2:Al_2O_3$ ratio of at least 5.5:1 and a lanthanum:cerium ratio of at least 3:1.

12. A process for the catalytic conversion of high boiling, heavy hydrocarbons high in metal contaminants and high in Conradson carbon-producing components, which comprises contacting the hydrocarbon at an elevated temperature with a catalyst as claimed in any one of claims 1—8 or as prepared by a method claimed in any one of claims 9—11, and recovering therefrom the catalytic conversion products.

13. A process according to claim 12, wherein the hydrocarbon feed is one which contains one or more metallic contaminants including vanadium, and Conradson carbon-producing components producing Conradson carbon values in the range 2—10.

14. A process according to claim 12 or 13, wherein the hydrocarbon feed is a reduced crude, topped crude, residual oil, shale oil, an oil product from coal liquefaction, or a tar sand oil product.

## Patentansprüche

1. Teilchenförmiger Katalystator für die katalytische Umwandlung von hochsiedenden Kohlenwasserstoffen, die einen hohen Gehalt an Metallverunreinigungen und Conradson-Kohlenstoffbildungswerten aufweisen, wobei der katalysator ein mit Seltenen Erden ausgetauschter kristalliner Zeolit dispergiert in einer porösen Matrix ist, dadurch gekennzeichnet, daß die Katalysatorteilchen wenigstens 35 Gew.% (bezogen auf das gesamte Katalysatorgewicht) eines mit Seltenen Erden ausgetauschten kristallinen Zeolits mit einem $SiO_2:Al_2O_3$ Verhältnis von wenigstens 4.5, einem Lanthan:Cerverhältnis von wenigstens 1:1 aufweist und nicht mehr als 0.25 Gew.% (bezogen auf das gesamte Katalysatorgewicht) an Restnatrium dispergiert in einer porösen Matrix enthält, die ein Gemisch aus Ton und feuerfestem Metalloxid ist, sowie der Katalysator ein Porenvolumen von wenigstens 0,22 ml/g und eine durchschnittliche Porengröße von wenigstens 500 Ångström (0,05 µm) besitzt.

2. Katalysator nach Anspruch 1, dadurch gekennzeichnet, daß der kristalline Zeolit ein $SiO_2:Al_2O_3$ Verhältnis von wenigstens 5.5, ein Lanthan-Cerverhältnis von wenigstens 3:1 und einen Restnatriumgehalt von weniger als 0,1% aufweist.

3. Katalystator nach Anspruch 1 oder 2, dadurch gekennzeichnet, daß die Matrix ein Porenvolumen von 0,4 bis 0,8 ml/g und eine Porengrößenverteilung aufweist, bei der wenigstens 40% der Poren einen Durchmesser von wenigstens 500 Ångström (0,05 µm) und wenigstens 25% einen Durchmesser von größer als 1000 Ångström (0,1 µm) aufweist.

4. Katalysator nach einem der vorangehenden Ansprüche, dadurch gekennzeichnet, daß das feuerfeste Metalloxid Siliziumdioxid, Aluminiumoxid, Siliziumdioxid-Aluminiumoxid, Siliziumdioxid-Magnesiumoxid, Siliziumdioxid-Aluminiumoxid-Magnesiumoxid, Siliziumdioxid-Titandioxid, Silziumdioxidzirkonoxid, Titandioxid, Zirkonoxid oder ein Gemisch von zwei oder mehr derselben ist.

5. Katalysator nach einem der vorangehenden Ansprüche, dadurch gekennzeichnet, daß die Tonkomponente Kaolin, Kaolinit, Halloysit, Monotmorillonit, Metakaolin oder ein säuremodifizierter Ton ist.

6. Katalysator nach einem der vorangehenden Ansprüche, dadurch gekennzeichnet, daß der Zeolit ein mit Seltenen Erden ausgetauschter Mordenit, Gmelinit, Zeolit "L", ZSM4, Faujasit oder desaluminierter Faujasit ist.

7. Katalysator nach einem der vorangehenden Ansprüche 1 bis 5, dadurch gekennzeichnet, daß der Zeolit ein mit Seltenen Erden ausgetauschter kristalliner "Y" Faujasit mit einem Siliziumdioxid:Aluminiumoxidverhältnis von wenigstens 5:1 ist.

8. Katalysator nach einem der vorangehenden Ansprüche, dadurch gekennzeichnet, daß derselbe zusätzlich ein Vanadin immobilisierendes Mittel enthält in Form einer Titan-, Zirkon- oder Indiumverbindung, die in der lage ist bei erhöhter Temperatur mit Vanadinpentoxid einen Komplex zu bilden.

9. Verfahren zum Ausbilden eines Katalysators nach den Ansprüchen 1 bis 8, dadurch gekennzeichnet, daß eine Aufschlämmung oder Gel gebildet wird bestehend aus einem feuerfesten Metalloxid und dem Ton, der Aufschlämmung oder dem Gel ein mit Seltenen Erden ausgetauschter Zeolit zugesetzt wird, die so gebildete Aufschlämmung sprühgetrocknet, die sprühgetrockneten Teilchen gewaschen und dieselben sodann einer weiteren Ionenaustauscherbehandlung mit Seltenen Erden unterworfen werden.

10. Verfahren nach Anspruch 9, dadurch gekennzeichnet, daß eine wässrige Natriumsilikat- und/oder Natriumaluminatlösung geliert, in das Gel ein Kaolinitton und ein mit Seltenen Erden ausgetauschter kristalliner Zeolit mit einem Verhältnis $SiO_2:Al_2O_3$ von wenigstens 4.5 und einem Lanthan: Cer Verhältnis von wenigstens 3:1 eingebracht, die so gebildete Aufschlämmung sprühgetrocknet und die so gebildeten Teilchen gewaschen und einer weiteren Ionenaustauschbehandlung mit Seltenen Erden unterworfen werden unter Verringern des Restnatriumgehaltes des Zeolits in den Teilchen auf weniger als 0.1%.

11. Verfahren nach Anspruch 10, dadurch gekennzeichnet, daß der mit Seltenen Erden ausgetauschte kristalline Zeolit ein Y-Type kristalliner Faujasit mit einem verhältnis von $SiO_2:Al_2O_3$ von wenigstens 5.5:1 und einem Lanthan:Cer-Verhältnis von wenigstens 3:1 ist.

12. Verfahren für die katalytische Umwandlung hochsiedender schwerer Kohlenwasserstoffe, die einen hohen Gehalt an Metallverunreinigungen und Conradson-Kohlenstoffbildungswerten aufweisen, dadurch gekennzeichnet, daß die Kohlenwasserstoffe bei erhöhter Temperatur mit einem Katalysator nach einem der Ansprüche 1 bis 8 oder wie nach dem Verfahren gemäß Ansprüchen 9 bis 11 hergestellt, in berührung gebracht und die katalytischen Umwandlungsprodukte sodann abgetrennt werden.

13. Verfahren nach Anspruch 12, dadurch gekennzeichnet, daß die Kohlenwasserstoffbeschickung eine oder mehrere Metallverunreinigungen, einschließlich Vanadin und Conradson-Kohlenstoffbildungskomponenten die zu Conradson-Kohlenstoffwerten von 2 bis 10 führen enthält.

14. Verfahren nach Anspruch 12 oder 13, dadurch gekennzeichnet, daß die Kohlenwasserstoffbeschickung ein reduziertes Rohöl, von leicht siedenden Anteilen befreites Rohöl, Restöl, Schieferöl, ein von der Kohleverflüssigung herrührendes Ölprodukt oder ein Teersandölprodukt ist.

## Revendications

1. Un catalyseur en particules pour la conversion catalytique d'hydrocarbures lourds à point d'ébullition élevé, riches en impuretés métalliques et en constituants formateurs de carbone Conradson, ce catalyseur comprenant une zéolite cristalline ayant subi un échange avec des terres rares, dispersés dans une gangue poreuse, caractérisé en ce que les particules de catalyseur comprennent au moins 35% en poids (sur la base du poids total du catalyseur) d'une zéolite cristalline ayant subi un échange avec des terres rares, ayant un rapport $SiO_2:Al_2O_3$, d'au moins 4,5, un rapport lanthane/cérium d'au moins 1:1 et ne contenant pas plus de 0,25% en poids (sur la base du poids total du catalyseur) de sodium résiduel, dispersé dans une gangue poreuse comprenant un mélange d'argile et d'un oxyde métallique réfractaire, le catalyseur ayant un volume de pores d'au moins 0,22 cm³/g et une grosseur moyenne de pores d'au moins 0,05 µm (500 Å).

2. Un catalyseur selon la revendication 1, caractérisé en ce que la zéolite cristalline a un raport $SiO_2:Al_2O_3$ d'au moins 5,5, un rapport lanthane/cérium d'au moins 3:1 et une teneur en sodium résiduel de moins de 0,1%.

3. Un catalyseur selon l'une des revendications 1 et 2, caractérisé en ce que la gangue a un volume de pores de la gamme de 0,4 à 0,8 cm³/g et une distribution de dimension de pores dans laquelle au moins 40% des pores ont un diamètre d'au moins 0,05 µm (500 Å)) et au moins 25% ont un diamètre supérieur à 0,1 µm (1000 Å).

4. Un catalyseur selon l'une des revendications 1 à 3, dans lequel l'oxyde métallique réfractaire est la silice, l'alumine, la silice-alumine, la silice-magnésie, la silice-alumine-magnésie, la silice-oxyde de titane, la silice-zircone, l'oxyde de titane, la zircone ou un mélange de deux ou de plusieurs de ces oxydes.

5. Un catalyseur selon l'une des revendications 1 à 4, dans lequel le constituant argile est le kaolin, la kaolitine, l'halloysite, la montmmorillonite, le métakaolin ou une argile modifiée par acide.

6. Un catalyseur selon l'une des revendications 1 à 5, dans lequel la zéolite est un mordénite, une gmélinite, une zéolite "L", un ZSM4, une faujasite ou une faujasite désaluminisée, ayant subi un échange avec des terres rares.

7. Un catalyseur selon l'un des revendications 1 à 5, dans lequel la zéolite est une faujasite "Y" cristalline ayant subi un échange avec des terres rares, ayant un rapport silice/alumine d'au moins 5:1.

8. Un catalyseur selon l'une des revendications 1 à 7, qui contient en outre un agent d'immobilisation du vanadium constituant un composé de titane, de zirconium ou d'indium qui est capable de former un complexe à température élevée avec le pentoxyde de vanadium.

9. Un procédé de formation d'un catalyseur selon l'une des revendications 1 à 8, qui consiste à former une bouillie ou un gel comprenant l'oxyde de métal réractaire et l'argile, à ajouter à la bouillie ou au gel une zéolite ayant subi un échange avec des terres rares, à sécher par pulvérisation la bouillie ainsi formée, à laver les particules séchées par pulvérisation et à soumettre les particules lavées et séchées à un autre traitement d'achange d'ions avec des terres rares.

10. Un procédé selon la revendication 9, qui consiste à gélifier une solution aqueuse de silicate de sodium et/ou d'aluminate de sodium, à incorporer au gel un argile kaolinite et une zéolite cristalline ayant subi un échange avec des terres rares, ayant un rapport $SiO_2{:}Al_2O_3$ d'au moins 4,5 et un rapport lanthane/cérium d'au moins 3:1, à sécher par pulvérisation la bouillie ainsi formée, à laver les particules séchées par pulvérisation et à soumettre les particules lavées à un nouveau traitement d'échange d'ions avec des terres rares de manière à ramener la teneur résiduelle en sodium de la zéolite des particules à moins de 0,1%.

11. Un procédé selon la revendication 10 ou 11, dans lequel la zéolite cristalline ayant subi un échange avec des terres rares est une faujasite cristalline de type Y ayant un rapport $SiO_2{:}Al_2O_3$ d'au moins 5,5:1 et un rapport lanthane/cérium d'au moins 3:1.

12. Un procédé pour la conversion d'hydrocarbures lourds à point d'ébullition élevé, riches en impuretés métalliques et riches en constituants formateurs de carbone Conradson, qui consiste à mettre l'hydrocarbure en contact, à une température élevée, avec un catalyseur selon l'une quelconque des revendications 1 à 8 ou préparé par un procédé selon l'une quelconque des revendications 9 à 11, et à récupérer les produits de conversion catalytique.

13. Un procédé selon la revendication 12, dans lequel l'alimentation d'hydrocarbures est une alimentation qui contient une ou plusieurs impuretés métalliques, comprenant le vanadium, et des constituants formateurs de carbone Conradson donnant des valeurs de carbone Conradson de la gamme de 2 à 10.

14. Un procédé selon l'une des revendications 12 ou 13, dans lequel l'alimentation hydrocarbonée est un brut réduit, un brut étêté, une huile résiduelle, une huile de schiste, un produit huileux provenant de la liquéfaction du charbon ou un produit huileux de sable bitumeux.